# EUROPÄISCHE PATENTSCHRIFT

(11) **EP 0 548 484 B1**
(45) Veröffentlichungstag und Bekanntmachung des Hinweises auf die Patenterteilung: **27.03.1996**
(21) Anmeldenummer: 92117674.9
(22) Anmeldetag: 16.10.1992
(51) Int. Cl.: G21K 4/00, G03C 5/17

(54) **Verfahren zur Herstellung einer Röntgenverstärkerfolie**
Process of manufacturing an X-ray intensifying sheet
Procédé de fabrication d'une feuille renforçatrice pour rayons X

(30) Priorität: 20.12.1991 DE 4142150
(43) Veröffentlichungstag der Anmeldung: 30.06.1993
(73) Patentinhaber: Forschungszentrum Karlsruhe GmbH, D-76133 Karlsruhe (DE)
(72) Erfinder: Kaiser, Egon, W-7513 Stutensee 1. (DE); Romer, Oskar, Dr., W-7513 Stutensee-Fr. (DE); Schubert, Klaus, Dr., W-7500 Karlsruhe 41 (DE); Bier, Wilhelm, Dr., W-7514 Eggenstein-Leopoldshafen (DE); Guber, Andreas, Dr., W-7500 Karlsruhe 41 (DE)
(74) Vertreter: Gottlob, Peter, Dipl. Ing.

(56) Entgegenhaltungen:
- EP-A- 0 126 564
- DE-A- 3 909 450

## Beschreibung

Die Erfindung betrifft ein Verfahren zur Herstellung einer Röntgenverstärkerfolie gemäß dem Oberbegriff des ersten Patentanspruchs.

Ein solches Verfahren ist aus der EP 0 126 564 A2 bekannt. Gegenstand dieser europäischen Patentanmeldung ist eine Röntgenverstärkerfolie, die in einer honigwabenähnlichen Anordnung eine Vielzahl von Zellen bzw. Vertiefungen enthält, die durch Stege voneinander getrennt sind und bei der die Vertiefungen mit einem stimulierbaren Leuchtstoff gefüllt sind. Die honigwabenähnliche Struktur der Folie kann entweder durch Abformen eines geeigneten, strukturierten Werkzeugs auf eine Kunststoff-Folie oder durch Lithographieverfahren mit nachfolgendem Entwickeln (Ätzen) erhalten werden.

Zur Herstellung der Röntgenverstärkerfolie wird aus dem pulverförmigen Leuchtstoff, einem Binder und ggf. einem Lösungsmittel eine Dispersion hergestellt, mit der die Vertiefungen befüllt werden. Danach wird die Dispersion ausgehärtet.

Als Binder werden eine Reihe von Gießharzen und polymerisierbaren organischen Verbindungen, unter anderem Polymethylmethacrylat vorgeschlagen.

Der Binder soll in einer Menge von 0,01 bis 1 Gewichtsteil, vorzugsweise von 0,03 bis 0,2 Gewichtsteilen pro Gewichtsteil des Leuchtstoffes eingesetzt werden.

Gemäß einem Durchführungsbeispiel werden ein pulverförmiger Leuchtstoff mit einer mittleren Korngröße von 2 µm und ein Binder bestehend aus einem Polyvinylbutyral vermischt und in Cyclohexanon gelöst. Die Lösung wird in die Vertiefungen der Folie gefüllt und über Nacht ausgehärtet.

Es hat sich herausgestellt, daß die Beimischung von größeren Mengen des Leuchtstoffes die Aushärtung bei einigen der als Binder vorgeschlagenen Verbindungen stört, so daß der Leuchtstoff in eine mechanisch wenig belastbare Matrix eingebunden ist. In der Druckschrift wird daher vorgeschlagen, daß die mit der Dispersion behandelte Seite der Röntgenverstärkerfolie generell durch eine Schutzfolie abgedeckt wird. Die Fixierung der Schutzfolie wirft jedoch verfahrenstechnische Probleme auf. Eine Verringerung des Anteils an Leuchtstoff in der Leuchtstoff/Binder-Dispersion steht jedoch im Gegensatz zu dem Ziel, die Vertiefungen mit einer möglichst großen Menge an Leuchtstoff zu befüllen.

Ein hoher Anteil des pulverförmigen Leuchtstoffs führt weiterhin zu einer sehr viskosen, pastenartigen Leuchtstoff/Binder-Dispersion, die sich nur schwer in die notwendigerweise sehr kleinen Vertiefungen der Kunststoff-Folie einfüllen läßt.

Der Erfindung liegt die Aufgabe zugrunde, diesen Nachteilen abzuhelfen und insbesondere ein leichter durchführbares Verfahren vorzuschlagen, mit dessen Hilfe die Vertiefungen einer Kunststoff-Folie zuverlässig und mit einem hohen Leuchtstoffanteil befüllt werden können. Mit dem Verfahren sollen sich ferner Röntgenverstärkerfolien herstellen lassen, in denen der Leuchtstoff sicher fixiert und versiegelt ist und deren befüllte Seite eine ausreichende mechanische Festigkeit und Resistenz aufweist, so daß ohne Nachteile auf die Verwendung einer Schutzfolie verzichtet werden kann.

Die Aufgabe wird durch die im ersten Patentanspruch gekennzeichneten Merkmale gelöst. Im abhängigen Anspruch wird eine besonders bevorzugte Verfahrensvariante beschrieben.

Erfindungsgemäß wird als Binder Polymethylmethacrylat (PMMA) ausgewählt.

Vor der Befüllung der Vertiefungen mit der Leuchtstoff/Binder-Dispersion wird die mit den Vertiefungen versehene Kunststoff-Folie vorzugsweise in ein Bad aus einem Verdünner für PMMA gebracht. Der Verdünner besteht üblicherweise aus einem niedrigmolekularen PMMA. Vorzugsweise wird ein solcher Verdünner eingesetzt, dem kein Aktivator und/oder kein Katalysator beigemischt ist.

Mit diesem Verfahrensschritt wird erreicht, daß die Luft in den Vertiefungen durch den Verdünner verdrängt wird. Dieser Vorgang wird dadurch wirkungsvoll unterstützt, daß die Kunststoff-Folie mit Ultraschall in Schwingungen versetzt wird. Bevorzugt wird daher die Kunststoff-Folie in ein Ultraschallbad gelegt, das den Verdünner enthält. Es hat sich gezeigt, daß zur Vermeidung von Hohlräumen in den Vertiefungen die Verdrängung der Luft durch den Verdünner äußerst vorteilhaft ist, da allein durch die Befüllung der Vertiefungen mit der Dispersion in den meisten Fällen mit Luft gefüllte Hohlräume bestehen bleiben, die die Qualität der Röntgenverstärkerfolie stark beeinträchtigen.

Die gitterartig angeordneten Vertiefungen werden anschließend mit der Leuchtstoff/Binder-Dispersion befüllt. Die Dispersion enthält zusätzlich den Verdünner und ggf. einen Aktivator und einen Katalysator. Als Katalysator werden die üblicherweise verwendeten Verbindungen, etwa Benzoyl- oder Acetylperoxid, in den bekannten Mengen eingesetzt. Der Anteil des Verdünners wird so bemessen, daß eine niedrigviskose Dispersion entsteht, die sich leicht gießen läßt. Die Viskosität des Binder/Verdünner-Systems soll vorzugsweise unter 500 mPas, besonders bevorzugt im Bereich von 100 bis 10 mPas liegen.

Damit das Leuchtstoff-Pulver, das spezifisch schwerer ist als das PMMA-System, homogen in der Dispersion verteilt wird, hat es sich bewährt, die Komponenten Leuchtstoff, PMMA, Verdünner und Aktivator zu vermischen und anschließend in einem Ultraschallbad einige Minuten zu homogenisieren. Danach wird der Katalysator zugegeben und einige Sekunden im Ultraschallbad homogenisiert.

Vor, während oder unmittelbar nach der Befüllung der Vertiefungen mit der Dispersion wird die Kunststoff-Folie einer Atmosphäre, die den Dampf des Verdünners enthält, ausgesetzt. Die Atmosphäre kann beispielsweise durch Erwärmen einer kleinen Menge des Verdünners hergestellt werden.

Nach der Befüllung der Vertiefungen mit der Dispersion wird die befüllte Kunststoff-Folie eine zur Sedimentation des Leuchtstoffs ausreichende Zeit in der Verdünner-Atmosphäre belassen.

Es hat sich gezeigt, daß eine Dispersion, die Leuchtstoff, PMMA, Verdünner, Aktivator und Katalysator enthält, in der Atmosphäre des Verdünners stark verzögert aushärtet. In der Verdünner-Atmosphäre ist eine solche Dispersion nach ca. 2 Stunden noch gießfähig und bleibt nach ca. 20 Stunden noch honigartig weich, während dieselbe Konsistenz an Luft in ca. 20 Minuten bzw. 35 - 40 Minuten erreicht wird. Diese Beobachtung eröffnet daher die Möglichkeit, den Leuchtstoff in den Vertiefungen sedimentieren zu lassen. Die Dispersion kann deshalb mit Hilfe des Verdünners niedrigviskos eingestellt werden, so daß sich die Vertiefungen leicht etwa durch Aufgießen befüllen lassen, wonach das spezifisch schwerere Leuchtstoffpulver sich in den Vertiefungen absetzt. Wenn die Befüllung der Vertiefungen in der Verdünner-Atmosphäre vorgenommen wird, bleibt die Dispersion somit eine für die Sedimentation des Leuchtstoff-Pulvers ausreichende Zeit niedrigviskos, so daß die Sedimentation des Leuchtstoffpulvers zumindest weitgehend abgeschlossen ist, bevor die Aushärtung merklich einsetzt.

Die Dauer der Sedimentation hängt selbstverständlich vom Dichteunterschied des Leuchtstoff-Pulvers und der übrigen Bestandteile der Dispersion sowie von der Viskosität der Dispersion ab. Üblicherweise ist die Sedimentation des Leuchtstoff-Pulvers nach mindestens 20 Minuten, im allgemeinen nach etwa 30 bis 60 Minuten zumindest weitgehend abgeschlossen. Während dieser Zeit ändert sich die Viskosität der Dispersion bei der erfindungsgemäßen Verfahrensführung nicht merklich.

Wenn die Sedimentation abgeschlossen ist, kann die Dispersion in üblicher Weise an Luft ausgehärtet werden.

Wie erwähnt, hängt die Sedimentationszeit von der spezifischen Dichte des Leuchtstoff-Pulvers ab. Als gut sedimentierbar erwies sich der Leuchtstoff Gd₂O₂S. Mit diesem Leuchtstoff werden zufriedenstellende Röntgenverstärkerfolien erhalten. Daneben sind jedoch auch die bekannten Leuchtstoffe, soweit ihre spezifische Dichte ausreichend hoch ist, einsetzbar.

Vorzugsweise wird ein Leuchtstoff-Pulver verwendet, dessen Pulverkörner nicht eine im wesentlichen einheitliche Größe aufweisen, sondern innerhalb eines Größenbereichs variieren. Mit einem solchen Pulver kann eine höhere Raumerfüllung erreicht erreicht werden, da die Hohlräume zwischen großen Körnern durch kleine Körner ausgefüllt werden.

Röntgenverstärkerfolien, die nach dem erfindungsgemäßen Verfahren hergestellt wurden, weisen einige wesentliche Vorzüge auf.

Durch die Verwendung von PMMA sind die Leuchtstoffkörner nach der Aushärtung in eine Matrix mit hoher Dichte und hohem Brechungsindex eingebettet. Dadurch wird die Reflexion des durch die Röntgenstrahlen angeregte Fluoreszenzlichtes an der Grenze dieser Matrix und der Kunststoff-Folie begünstigt. Daher kann auf die Verspiegelung der Kunststoff-Folie in den meisten Fällen verzichtet werden.

Weiterhin bildet die in den Vertiefungen ausgehärtete Dispersion eine sehr harte und kratzfeste Oberfläche aus. Dieser Effekt kann unter anderem auch darauf zurückgeführt werden, daß die Leuchtstoffkörner in die Vertiefungen sedimentieren und dort in hoher Konzentration vorliegen, während an der Oberfläche praktisch reines PMMA aushärten kann.

Ferner härtet die Leuchtstoff/PMMA-Dispersion im Gegensatz zu einigen der bekannten Bindemittelsystemen ohne die Bildung von Schrumpfungsporen oder -rissen aus.

Schließlich wird dadurch, daß die Luft in den Vertiefungen der Kunststoff-Folie verdrängt wird, die Bildung von nicht befüllten Hohlräumen in den Vertiefungen vermieden.

Die Erfindung wird im folgenden anhand von Durchführungsbeispielen näher erläutert.

### Beispiel 1

### Herstellung einer Leuchtstoff/PMMA-Dispersion

Aus 23 Gewichtsteilen eines kommerziell erhältlichen PMMA (Acrifix 90, Warenzeichen der Fa. Röhm GmbH.), 34 Gewichtsteilen Verdünner mit Aktivatorzusatz (Verdünner 32, Fa. Röhm GmbH.) und 35 Gewichtsteilen des Leuchtstoffs Gd₂O₂S:Tb in Pulverform mit einer mittleren Partikelgröße von 4 µm wurde eine Mischung hergestellt. Die Mischung wurde ca. 7 Minuten in einem Ultraschallbad behandelt. Danach wurden 8 Gewichtsteile des Katalysators (Katalysator 20 der Fa. Röhm) zugesetzt und die Mischung wiederum für ca. 30 Sekunden im Ultraschallbad behandelt, wobei sich eine milchige, homogene Dispersion bildete. Die Dispersion war danach verwendungsfähig und wurde ohne weitere Standzeit eingesetzt.

### Beispiel 2

### Herstellung einer Röntgenverstärkerfolie

Es wurde eine Kunststoff-Folie mit den Maßen 2,5 cm · 6,5 cm eingesetzt, die im Rastermaß vom 100 µm gitterförmig angeordnete Vertiefungen in Form einer quadratischen Pyramide mit einem Steigungswinkel von 20° und einer Tiefe von ca. 250 µm aufwies.

Die Kunststoff-Folie wurde in ein Ultraschallbad gelegt, das aktivatorfreien Verdünner (Verdünner 30, Fa. Röhm GmbH.) enthielt. Die Ultraschallbehandlung dauerte 3 Minuten. Hiermit wurde eine intensive Reinigung der Folien erreicht und die Luft aus den pyramidenförmigen Vertiefungen verdrängt. Die Folie wurde aus dem Ultraschallbad in ein Gefäß überführt, in dem vorab durch Erwärmen einer kleinen Verdünnermenge eine Verdünnerdampf-Atmosphäre erzeugt wurde. Der spezifisch schwerere Verdünnerdampf verhindert auch bei geöffnetem Gefäß während des Befüllvorgangs den Zutritt von Luft. Anschließend wurde so viel frisch zubereitete Dispersion nach Beispiel 1 auf die Folie aufgetropft, bis die Vertiefungen mit der Dispersion befüllt waren. Die befüllte Folie wurde in der Dampfatmosphäre 60 Minuten stehen gelassen und danach an Luft vollständig ausgehärtet. Die ausgehärtete Oberfläche der Dispersion erreicht die Beständigkeit und Härte von Plexiglasoberflächen. Im ausgehärteten Zustand enthalten die pyramidenförmigen Vertiefungen den Leuchtstoff in einer Konzentration von etwa 65 - 70 %. Aus Rasterelektronenmikroskopaufnahmen der geschnittenen Folie war zu ersehen, daß die pyramidenförmigen Vertiefungen blasenfrei nahezu bis zum Grund homogen mit dem Leuchtstoffpulver befüllt waren.

## Patentansprüche

1. Verfahren zur Herstellung einer Röntgenverstärkerfolie, bei dem
a) aus einem pulverförmigen, in Röntgenlicht fluoreszierenden Leuchtstoff, einem Polymethylmethacrylat (PMMA) als Binder und einem Verdünner für PMMA eine Dispersion hergestellt wird,
b) mit der Dispersion in einer Kunststoff-Folie gitterartig angeordnete Vertiefungen befüllt werden,
c) die Dispersion ausgehärtet wird,
dadurch gekennzeichnet, daß
d) die Kunststoff-Folie dem Dampf des Verdünners ausgesetzt wird, bevor die in der Kunststoff-Folie gitterartig angeordneten Vertiefungen mit der Dispersion befüllt werden,
e) die Kunststoff-Folie in dem Dampf des Verdünners für eine zur Sedimentation des Leuchtstoffs ausreichende Zeit belassen wird.

2. Verfahren nach Anspruch 1, dadurch gekennzeichnet, daß die Kunststoff-Folie vor Schritt d) in einem Bad des Verdünners durch Ultraschall in Schwingungen versetzt wird.

## Claims

1. Method of producing an X-ray intensifier film, wherein
a) a dispersion is produced from a pulverulent luminous substance which is fluorescent in X-ray light, a polymethylmethacrylate (PMMA) which serves as the binder, and a thinner for PMMA,
b) indentations, which are disposed in a lattice-like manner in a plastics material film, are filled with the dispersion,
c) the dispersion is hardened,
characterised in that
d) the plastics material film is subjected to the vapour of the thinner before the indentations, which are disposed in a lattice-like manner in the plastics material film, are filled with the dispersion,
e) the plastics material film is left in the vapour of the thinner for a time which is sufficient for the sedimentation of the luminous substance.

2. Method according to claim 1, characterised in that, prior to step d), the plastics material film is set into oscillatory movements by ultrasonics in a bath of the thinner.

## Revendications

1. Procédé de fabrication d'une feuille amplificatrice des rayons X, selon lequel :
a) on fabrique une dispersion avec une matière luminescente à fluorescence aux rayons X, à l'état de poudre, un polyméthylméthacrylate (PMMA) comme liant et un diluant pour le PMMA,
b) on remplit avec cette dispersion, des cavités réparties suivant une grille dans une feuille de matière plastique,
c) on laisse durcir la dispersion,
caractérisé en ce que :
d) on expose la feuille de matière plastique à la vapeur du diluant avant de remplir les cavités réparties suivant une grille dans la feuille de matière plastique avec la dispersion,
e) on laisse séjourner la feuille de matière plastique dans la vapeur de diluant pendant un temps suffisant pour la sédimentation de la matière luminescente.

2. Procédé selon la revendication 1, caractérisé en ce qu'avant l'étape b), on expose la feuille de matière plastique à des ultrasons dans un bain de diluant.
